(19) Europäisches Patentamt
European Patent Office
Office européen des brevets

(11) EP 4 394 979 A1

(12) **EUROPEAN PATENT APPLICATION**
published in accordance with Art. 153(4) EPC

(43) Date of publication:
**03.07.2024 Bulletin 2024/27**

(21) Application number: **23788585.0**

(22) Date of filing: **12.04.2023**

(51) International Patent Classification (IPC):
***H01M 10/0565*** *(2010.01)* ***H01M 10/056*** *(2010.01)*
***H01M 10/42*** *(2006.01)* ***H01M 10/052*** *(2010.01)*
***H01M 4/525*** *(2010.01)* ***H01M 4/505*** *(2010.01)*

(52) Cooperative Patent Classification (CPC):
**H01M 4/505; H01M 4/525; H01M 10/052; H01M 10/056; H01M 10/0565; H01M 10/42;**
Y02E 60/10

(86) International application number:
**PCT/KR2023/004913**

(87) International publication number:
**WO 2023/200236 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.04.2022 KR 20220045454**
**03.04.2023 KR 20230043320**

(71) Applicant: **LG Energy Solution, Ltd.**
**Seoul 07335 (KR)**

(72) Inventors:
- **HWANG, Sunwook**
  **Daejeon 34122 (KR)**
- **HAN, Hyeaeun**
  **Daejeon 34122 (KR)**
- **KIM, Dong Kyu**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) ELECTROLYTE FOR LITHIUM SECONDARY BATTERY, AND LITHIUM SECONDARY BATTERY COMPRISING SAME

(57) Disclosed is an electrolyte for a lithium secondary battery of forming a cationic polymer backbone to minimize the movement of anions, thereby accelerating cations, and improving additional lithium-ion transfer capability and mechanical properties by including an oxide-based ceramic, and a lithium secondary battery comprising the same. The electrolyte for a lithium secondary battery comprises a polymer electrolyte containing a hydrocarbon-based polymer compound containing a cationic functional group; a flame-retardant liquid electrolyte; and a cross-linking agent.

EP 4 394 979 A1

**Description**

[Technical Field]

The present application claims the benefits of priorities based on Korean Patent Application No. 10-2022-0045454 filed on April 13, 2022 and Korean Patent Application No. 10-2023-0043320 filed on April 3, 2023, all the contents of which are incorporated herein by reference.

The present invention relates to an electrolyte for a lithium secondary battery and a lithium secondary battery comprising the same, and more specifically, to an electrolyte for a lithium secondary battery capable of accelerating cations by forming a cationic polymer backbone to minimize the movement of anions, and improving additional lithium-ion transfer capability and mechanical properties by including an oxide-based ceramic, and a lithium secondary battery comprising the same.

[Background Art]

Recently, with the rapid spread of electronic devices using batteries such as mobile phones, notebook computers, and electric vehicles, there is a rapid increase in demand for secondary batteries that are small and light and also have relatively high capacity. In particular, lithium secondary batteries are in the spotlight as a power source for operating portable devices because they are lightweight and have high energy density. Accordingly, efforts for research and development to improve the performance of lithium secondary batteries are being actively conducted. In these lithium secondary batteries, electrical energy is produced by oxidation and reduction reactions when lithium-ions are intercalated/deintercalated at the positive and negative electrodes in a state where an organic electrolyte solution or a polymer electrolyte solution is charged between the positive electrode made of an active material capable of intercalating and de-intercalating lithium-ions and the negative electrode.

As the positive electrode active material of the lithium secondary battery, lithium cobalt oxide ($LiCoO_2$), lithium nickel oxide ($LiNiO_2$), lithium manganese oxide ($LiMnO_2$, $LiMn_2O_4$, etc.), lithium iron phosphate compound ($LiFePO_4$), lithium nickel cobalt manganese-based positive electrode active material (or lithium NCM-based positive electrode active material, or NCM-based lithium composite transition metal oxide, or High Ni positive electrode material) that can realize high capacity by substituting a part of nickel (Ni) with cobalt (Co) and manganese (Mn) have been used. However, the conventional lithium secondary battery described above leads to thermal runaway due to the exothermic reaction initiated by the decomposition reaction of the negative electrode SEI (solid electrolyte interface) and the reaction between the positive electrode, which becomes unstable as the content of nickel (Ni) is increased, and an electrolyte solution containing a carbonate-based solvent, and this acts as a factor that greatly threatens the stability of the battery. In addition, particularly, a lithium-ion battery (LIB) using a lithium nickel cobalt manganese-based positive electrode active material and a graphite negative electrode together has a problem that it is relatively more vulnerable to heat.

Accordingly, in this technical field, attempts are being made to change the composition of the positive electrode active material or the composition of the electrolyte, and in particular, by applying a polymeric compound and an inorganic compound and the like to the electrolyte, efforts are being made to supplement the problems of the existing lithium secondary battery. In addition, the polymeric electrolyte has superior advantages over the inorganic solid electrolyte in terms of flexibility, lightness, processability, and cost, and thus the cases in which the polymeric electrolyte is applied to a lithium secondary battery tend to gradually increase.

As such, although the polymeric electrolyte has various advantages, since it is also clear that it is inferior to other classes of electrolytes, efforts to compensate for such problems are also continuously being made. In other words, it is pointed out that the polymeric electrolyte has weak mechanical properties and low ionic conductivity compared to the inorganic solid electrolyte. In addition, the polymeric electrolyte has a limitation in that it has a low cation (Li-ion) transport coefficient (t+) compared to a liquid electrolyte, and thus has a large concentration polarization (resistance).

Accordingly, there is an urgent need for the development of an electrolyte for a lithium secondary battery, which uses a polymeric electrolyte with various advantages, but forms a cationic polymer backbone to minimize the movement of anions, thereby accelerating cations, and can improve additional lithium-ion transfer capability and mechanical properties by including an oxide-based ceramic.

[Disclosure]

[Technical Problem]

Therefore, it is an object of the present invention to provide an electrolyte for a lithium secondary battery which is capable of forming a cationic polymer backbone to minimize the movement of anions, thereby accelerating cations, and improving additional lithium-ion transfer capability and mechanical properties by including an oxide-based ceramic,

and a lithium secondary battery comprising the same.

[Technical Solution]

In order to achieve the above object, the present invention provides an electrolyte for a lithium secondary battery comprising a polymer electrolyte containing a hydrocarbon-based polymer compound containing a cationic functional group; a flame-retardant liquid electrolyte; and a cross-linking agent.
In addition, the present invention provides a lithium secondary battery comprising a positive electrode containing a lithium nickel cobalt manganese-based positive electrode active material; a negative electrode; and the electrolyte for a lithium secondary battery interposed between the positive electrode and the negative electrode.

[Advantageous Effects]

According to the electrolyte for a lithium secondary battery according to the present invention and the lithium secondary battery comprising the same, the present invention has the advantage of accelerating cations by forming a cationic polymer backbone to minimize the movement of anions; and improving additional lithium-ion transfer capability and mechanical properties by including an oxide-based ceramic.

[Best Mode]

Hereinafter, the present invention will be described in detail.
The electrolyte for a lithium secondary battery according to the present invention comprises a polymer electrolyte containing a hydrocarbon-based polymer compound containing a cationic functional group; a flame-retardant liquid electrolyte; and a cross-linking agent.
The lithium secondary battery produces electrical energy by oxidation and reduction reactions when lithium-ions are intercalated/de-intercalated at the positive and negative electrodes, in a state in which an organic electrolyte or polymer electrolyte is charged between the positive electrode and the negative electrode made of an active material capable of intercalating and de-intercalating lithium-ions. In addition, in order to increase thermal stability, a positive electrode active material of lithium nickel cobalt manganese-based active material, in which a part of nickel (Ni) is replaced with cobalt (Co) and manganese (Mn), is applied to the battery. However, the conventional lithium secondary battery leads to thermal runaway, due to the exothermic reaction that begins with the decomposition reaction of the negative electrode SEI (solid electrolyte interface) and the reaction between the positive electrode, which becomes unstable as the nickel (Ni) content increases, and the electrolyte containing a carbonate-based solvent, and the thermal runaway acts as a major threat to the stability of the battery. In addition, particularly, the lithium-ion battery (LIB) using a lithium nickel cobalt manganese-based positive electrode active material and a graphite negative electrode together has a problem of being relatively more vulnerable to heat.
Accordingly, in this technical field, attempts are being made to change the composition of the positive electrode active material or the composition of the electrolyte, and in particular, by applying a polymeric compound and an inorganic compound and the like to the electrolyte, efforts are being made to supplement the problems of the existing lithium secondary battery. In addition, the polymeric electrolyte has superior advantages over the inorganic solid electrolyte in terms of flexibility, lightness, processability, and cost, and thus the cases in which the polymeric electrolyte is applied to a lithium secondary battery tend to gradually increase. As such, the polymeric electrolyte has various advantages, however, since it is also clear that it is inferior to other classes of electrolytes, efforts to compensate for such problems are also continuously being made. In other words, it is pointed out that the polymeric electrolyte has weak mechanical properties and low ionic conductivity compared to the inorganic solid electrolyte. In addition, the polymeric electrolyte has a limitation in that it has a low cation (Li-ion) transport coefficient (t+) compared to a liquid electrolyte, and thus has a large concentration polarization (resistance).
Accordingly, the applicant of the present invention invented an electrolyte for a lithium secondary battery, which uses a polymeric electrolyte with various advantages, but forms a cationic polymer backbone to minimize the movement of anions, thereby accelerating cations, and can improve additional lithium-ion transfer capability and mechanical properties by including an oxide-based ceramic, and a lithium secondary battery comprising the same.
Hereinafter, the electrolyte for a lithium secondary battery according to the present invention will be described in more detail. First, the polymer electrolyte comprised in the electrolyte for a lithium secondary battery of the present invention comprises a hydrocarbon-based polymer compound containing a cationic functional group. The hydrocarbon-based polymer compound containing the cationic functional group can accelerate cations by minimizing the movement of anions by cations (i.e., form positively charged polymer chains) formed on the polymer backbone. And through this, the cation transport coefficient may be increased compared to the case of using a conventional polymer electrolyte that does not contain the cationic functional group, and accordingly, the concentration polarization (resistance) may be

lowered.

The hydrocarbon-based polymer compound containing the cationic functional group contains a hydrocarbon structural unit having 6 to 20 carbon atoms, preferably 8 to 14 carbon atoms, which contains at least one cationic functional group. In addition, the cationic functional group may include at least one cation selected from nitrogen cations, oxygen cations, and sulfur cations, and among them, it is preferable to basically contain at least one nitrogen cation.

More specifically, the hydrocarbon-based polymer compound containing the cationic functional group may include at least one selected from the group consisting of polydiallyldimethylammonium ($(C_8H_{16}N^+)n$) represented by Formula 1 below, polymethacryloxyethyltrimethylammonium ($(C_9H_{18}NO_2^+)n$, $1 \leq n \leq 10{,}000$), polyallylamine ($[CH_2CH(CH_2NH_2)]n$, $1<n<10{,}000$) and polysodium 4-styrenesulfonate ($(C_8H_7NaO_3S)n$, $1 \leq n \leq 10{,}000$).

[Formula 1]

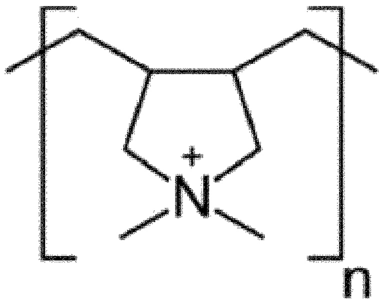

wherein, n is a natural number from 1 to 10,000, preferably from 1 to 100.

The anion, whose movement is minimized by the cation located on the backbone of the hydrocarbon-based polymer compound, is reduced in movement because it is bonded to the backbone of the polymer where the cation is located. In addition, the anion may be any anion that can be included in the electrolyte, and specifically, it may be an anion of a lithium salt comprised in the electrolyte. That is, in other words, the hydrocarbon-based polymer compound may further comprise an anion as a counter ion to the cation included in the cationic functional group. The anion of the lithium salt included in the electrolyte may be, for example, an anion of a lithium salt generally known in the art, such as $TFSI^-$ of LiTFSI, $SCN^-$ of LiSCN, $Br^-$ of LiBr and $Cl^-$ of LiCl. In addition, the hydrocarbon-based polymer compound containing the cationic functional group may be in a state in which the anion described above is bonded as a counter ion to the cation.

Therefore, for example, if the hydrocarbon-based polymer compound containing the cationic functional group is the polydiallyldimethylammonium represented by Formula 1, the anion (TFSI-) of the lithium salt may be bonded as a counter ion to the cation, as shown in Formula 2 below (polydiallyldimethylammonium-bis(trifluoromethanesulfonyl)imide, DADMA-TFSI). In addition, as the movement of anions is decreased, cations are accelerated, and through this, a cation transport coefficient can be increased, and thus concentration polarization (resistance) can be lowered.

[Formula 2]

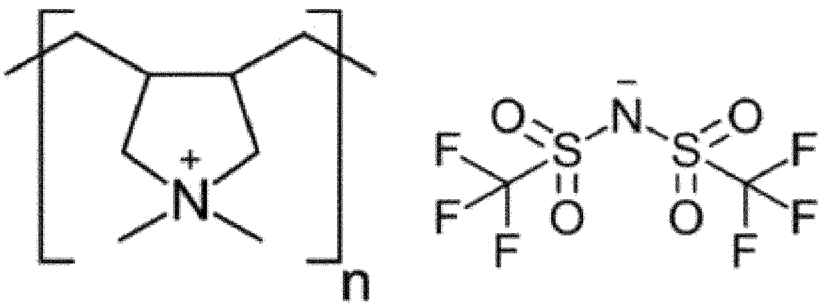

wherein, n is a natural number from 1 to 10,000, preferably from 1 to 100.

Meanwhile, the polymer electrolyte comprised in the electrolyte for a lithium secondary battery of the present invention, in addition to the above hydrocarbon-based polymer compound containing a cationic functional group, may further comprise a conventional polymer compound commonly used in the art, if necessary.

The polymer electrolyte may be contained in an amount of 30 to 60% by weight, preferably 30 to 50% by weight, and more preferably 35 to 40% by weight, based on the total weight of the electrolyte for a lithium secondary battery of the present invention. If the content of the polymer electrolyte is less than 30% by weight, there may be a problem that the effect by the cationic polymer does not appear. If the content of the polymer electrolyte exceeds 60% by weight, there may be a problem that the weight of the cationic polymer is excessive and thus ion conduction is rather hindered.

Next, the flame-retardant liquid electrolyte comprised in the electrolyte for a lithium secondary battery of the present invention will be described. The flame-retardant liquid electrolyte is for dissolving the hydrocarbon-based polymer compound containing a cationic functional group described above and dissociating and transferring lithium salt, and should be contained together with the hydrocarbon-based polymer compound containing a cationic functional group. In addition, the flame-retardant liquid electrolyte is trapped in the hardened cationic polymer and does not flow or come out, but may also exist in a liquid phase in the finally produced electrolyte.

More specifically, the flame-retardant liquid electrolyte comprises a solvent and a lithium salt. As the solvent comprised in the flame-retardant liquid electrolyte, at least one selected from the group consisting of carbonate-based compounds, phosphate-based compounds, and ionic liquids may be exemplified. Examples of the carbonate-based compound may comprise dimethyl carbonate, diethyl carbonate, dipropyl carbonate, ethylene carbonate, propylene carbonate, butylene carbonate, fluoroethylene carbonate, methyl propyl carbonate, ethyl methyl carbonate, ethyl propyl carbonate and methyl (2,2,2-trifluoroethyl) carbonate. Examples of the phosphate-based compound may comprise trimethyl phosphate, triethyl phosphate, and 2-(2,2,2-trifluoroethoxy)-1,3,2-dioxaphosphorane 2-oxide. Examples of the ionic liquid may comprise N-propyl-N-methylpyrrolidinium and 1-butyl-1-methylpyrrolidinium.

In addition, the solvent may further include ester, ether, or ketone alone or two or more of them, if necessary. Examples of these may be aprotic organic solvents such as $\gamma$-butyrolactone, n-methyl acetate, n-ethyl acetate, n-propyl acetate, dibutyl ether, N-methyl-2-pyrrolidinone, 1,2-dimethoxyethane, tetrahydrofuran derivatives such as 2-methyl tetrahydrofuran, dimethylsulfoxide, formamide, dimethylformamide, dioxolane and its derivatives, acetonitrile, nitromethane, methyl formate, methyl acetate, trimethoxy methane, sulfolane, methyl sulfolane, 1,3-dimethyl-2-imidazolidinone, methyl propionate, and ethyl propionate.

The lithium salt comprised in the flame-retardant liquid electrolyte may be at least one selected from the group consisting of LiFSI, LiTFSI, LiCl, LiBr, LiI, $LiClO_4$, $LiBF_4$, $LiPF_6$, $LiB_{10}Cl_{10}$, $LiCF_3SO_3$, $LiCF_3CO_2$, $LiC_4BO_8$, $LiAsF_6$, $LiSbF_6$, $LiAlCl_4$, $CH_3SO_3Li$, $CF_3SO_3Li$, $(C_2F_5SO_2)_2NLi$, $(CF_3SO_2)_3CLi$, lithium chloroborane, lithium lower aliphatic carboxylate having 4 or less carbon atoms, lithium 4-phenyl borate and lithium imide. The lithium salt may be contained at a concentration of 1.5 M to 4.0 M, preferably 1.5 M to 2.0 M in the electrolyte for a lithium secondary battery of the present invention. If the concentration of the lithium salt is less than 1.5 M or in excess of 4.0 M, the degree of contribution to the thermal stability of the battery may be insignificant, or there may be no further advantage in improving the thermal stability of the battery. In addition, if the concentration of the lithium salt is less than 1.5 M, it may be difficult to secure ion conductivity suitable for the operation of the battery. If the concentration of the lithium salt exceeds 4.0 M, the mobility of lithium-ions may be decreased due to an increase in the viscosity of the electrolyte, or the performance of the battery may be decreased due to an increase in the decomposition reaction of the lithium salt itself.

The flame-retardant liquid electrolyte may be comprised in an amount of 30 to 50% by weight, preferably 30 to 40% by weight, and more preferably 35 to 40% by weight, based on the total weight of the electrolyte for a lithium secondary battery of the present invention. If the content of the flame-retardant liquid electrolyte is less than 30% by weight, the ionic conductivity may be too low to be used as an electrolyte. If the content of the flame-retardant liquid electrolyte exceeds 50% by weight, there may be a problem that there may be too many components in the liquid state, rather than in the solid state.

In addition, the cross-linking agent included in the electrolyte for a lithium secondary battery of the present invention will be described. The cross-linking agent is for preventing leakage and improving additional mechanical properties, and serves to gelate or solidify the electrolyte for a lithium secondary battery of the present invention. The cross-linking agent may comprise at least one selected from the group consisting of ethoxylated trimethylolpropane triacrylate (ETPTA), trimethylolpropane ethoxytriacrylate, dipentaerythritol penta/hexaacrylate and tris(2-hydroxyethyl)isocyanurate triacrylate, but is not limited thereto.

The cross-linking agent may be comprised in an amount of 2 to 30% by weight, preferably 10 to 30% by weight, more preferably 20 to 30% by weight, based on the total weight of the electrolyte for a lithium secondary battery of the present invention. If the content of the cross-linking agent is less than 2% by weight, there may be a problem that cross-linking is not normally performed. If the content of the cross-linking agent exceeds 30% by weight, there may be a problem that due to the excessive weight of the cross-linking agent, ionic conduction is hindered.

Meanwhile, the electrolyte for a lithium secondary battery according to the present invention may further comprise an active oxide-based ceramic for the purpose of improving additional lithium-ion transfer capability and mechanical properties. Examples of the active oxide-based ceramic may comprise at least one selected from the group consisting of $Li_{1+x}Al_xGe_{2-x}(PO_4)_3$ (LAGP), $Li_7La_3Zr_2O_{12}$ (LLZO) and $Li_{1+x}Al_xTi_{2-x}(PO_4)_3$ (LATP). However, even if not exemplified here, any active oxide-based ceramic having properties similar to or equivalent to those of LAGP, LLZO, and LATP can

be applied as the active oxide-based ceramic of the present invention without particular limitation.

In addition, the active oxide-based ceramic may be included in an amount of 15 to 100 parts by weight, preferably 40 to 65 parts by weight, based on 100 parts by weight of the total weight of the electrolyte for a lithium secondary battery, comprising the polymer electrolyte, the flame-retardant liquid electrolyte and the cross-linking agent.

Next, the lithium secondary battery according to the present invention will be described.

The lithium secondary battery comprises a positive electrode containing a lithium nickel cobalt manganese-based positive electrode active material; a negative electrode; and an electrolyte for the lithium secondary battery interposed between the positive electrode and the negative electrode. The positive electrode comprises lithium nickel cobalt manganese-based positive electrode active material (or lithium NCM-based positive electrode active material, or NCM-based lithium composite transition metal oxide, or high Ni positive electrode material), and if it is applied to a battery, it is possible to realize high capacity. In addition, the lithium nickel cobalt manganese-based positive electrode active material may have a surface coated with a metal oxide.

The lithium nickel cobalt manganese-based positive electrode active material may be purchased commercially and used or prepared and used according to a manufacturing method well known in the art. For example, the lithium nickel cobalt manganese-based positive electrode active material may be prepared by adding an ammonium cation-containing complexing agent and a basic compound to a transition metal solution containing a nickel-containing raw material, a cobalt-containing raw material, and a manganese-containing raw material, and coprecipitating to prepare a nickel-cobalt-manganese precursor, and then mixing the nickel-cobalt-manganese precursor and a lithium raw material and over-sintering them at a temperature of 980°C or higher.

The nickel-containing raw material may be, for example, nickel-containing acetate, nitrate, sulfate, halide, sulfide, hydroxide, oxide or oxyhydroxide, etc., and specifically may be $Ni(OH)_2$, NiO, NiOOH, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, fatty acid nickel salt, nickel halide, or a combination thereof, but is not limited thereto. The cobalt-containing raw material may be, for example, cobalt-containing acetate, nitrate, sulfate, halide, sulfide, hydroxide, oxide or oxyhydroxide, etc., and specifically may be $Co(OH)_2$, CoOOH, $Co(OCOCH_3)_2 \cdot 4H_2O$, $Co(NO_3)_2 \cdot 6H_2O$, $CoSO_4$, $Co(SO_4)_2 \cdot 7H_2O$ or a combination thereof, but is not limited thereto. The manganese-containing raw material may be, for example, manganese-containing acetate, nitrate, sulfate, halide, sulfide, hydroxide, oxide, oxyhydroxide, or a combination thereof, and specifically may be manganese oxides such as $Mn_2O_3$, $MnO_2$, and $Mn_3O_4$; manganese salts such as $MnCO_3$, $Mn(NO_3)_2$, $MnSO_4$, manganese acetate, manganese dicarboxylate, manganese citrate, and manganese salts of fatty acids; manganese oxyhydroxide, manganese chloride or a combination thereof, but is not limited thereto.

The transition metal solution may be prepared by adding the nickel-containing raw material, the cobalt-containing raw material and the manganese-containing raw material to a solvent, specifically water, or a mixed solvent of water and an organic solvent (e.g. alcohol, etc.) capable of being uniformly mixed with water, or may be prepared by mixing the aqueous solution of the nickel-containing raw material, the aqueous solution of the cobalt-containing raw material, and the manganese-containing raw material. The ammonium cation-containing complex forming agent may be, for example, $NH_4OH$, $(NH_4)_2SO_4$, $NH_4NO_3$, $NH_4Cl$, $CH_3COONH_4$, $NH_4CO_3$ or a combination thereof, but is not limited thereto. Meanwhile, the ammonium cation-containing complex forming agent may be used in the form of an aqueous solution, and in this case, the solvent may be water or a mixture of water and an organic solvent (specifically, alcohol, etc.) capable of being uniformly mixed with water.

The basic compound may be, for example, a hydroxide of an alkali metal or alkaline earth metal such as NaOH, KOH or $Ca(OH)_2$, a hydrate thereof, or a combination thereof. The basic compound may also be used in the form of an aqueous solution, and in this case, the solvent may be water or a mixture of water and an organic solvent (specifically, alcohol, etc.) capable of being uniformly mixed with water. The basic compound is added to adjust the pH of the reaction solution, and may be added in an amount such that the pH of the metal solution is 11 to 13.

Meanwhile, the co-precipitation reaction may be performed at a temperature of 40 to 70 °C under an inert atmosphere such as nitrogen or argon. By the above process, particles of nickel-cobalt-manganese hydroxide are produced and precipitated in the reaction solution. The precipitated nickel-cobalt-manganese hydroxide particles can be separated according to a conventional method and dried to obtain a nickel-cobalt-manganese precursor. The nickel-cobalt-manganese precursor may be secondary particles formed by aggregation of primary particles, and the average particle diameter ($D_{50}$) of the nickel-cobalt-manganese precursor secondary particles may be 4 to 8 $\mu$m, preferably 4 to 7.5 $\mu$m, and more preferably 4 to 7 $\mu$m.

The lithium raw material may be a lithium-containing sulfate, nitrate, acetate, carbonate, oxalate, citrate, halide, hydroxide, oxyhydroxide or the like, and is not particularly limited as long as it is soluble in water. Specifically, the lithium source may be $Li_2CO_3$, $LiNO_3$, $LiNO_2$, LiOH, $LiOH \cdot H_2O$, LiH, LiF, LiCl, LiBr, LiI, $CH_3COOLi$, $Li_2O$, $Li_2SO_4$, $CH_3COOLi$ or $Li_3C_6H_5O_7$, etc., and any one or a mixture of two or more of these may be used. The lithium raw material may be mixed so that the molar ratio (Li/M) of lithium (Li) to all metal elements (M) of the nickel-cobalt-manganese precursor is 1 to 1.5, preferably 1 to 1.1.

The content of the lithium nickel cobalt manganese-based positive electrode active material may be 50 to 95

parts by weight, preferably 60 to 90 parts by weight, based on 100 parts by weight of the positive electrode. If the content of the lithium nickel cobalt manganese-based positive electrode active material is less than 50 parts by weight based on 100 parts by weight of the total weight of the positive electrode, the electrochemical characteristics of the battery may be deteriorated by the positive electrode active material. If the content exceeds 95 parts by weight, since additional components such as the binder and the electrically conductive material may be comprised in small amounts, it may be difficult to manufacture an efficient battery.

The positive electrode further comprises a binder and an electrically conductive material in addition to the positive electrode active material described above. The binder is a component that assists in the bonding between a positive electrode active material and an electrically conductive material and the bonding to a current collector, and for example, may be, but is not necessarily limited to, at least one selected from the group consisting of polyvinylidenefluoride (PVdF), polyvinylidenefluoride-polyhexafluoropropylene copolymer (PVdF/HFP), polyvinylacetate, polyvinylalcohol, polyvinylether, polyethylene, polyethyleneoxide, alkylated polyethyleneoxide, polypropylene, polymethyl(meth)acrylate, polyethyl(meth)acrylate, polytetrafluoroethylene (PTFE), polyvinylchloride, polyacrylonitrile, polyvinylpyridine, polyvinylpyrrolidone, styrene-butadiene rubber, acrylonitrile-butadiene rubber, ethylene-propylene-diene monomer (EPDM) rubber, sulfonated EPDM rubber, styrene-butylene rubber, fluorine rubber, carboxymethylcellulose (CMC), starch, hydroxypropyl cellulose, regenerated cellulose, and mixtures thereof.

The binder is usually added in an amount of 1 to 50 parts by weight, preferably 3 to 15 parts by weight, based on 100 parts by weight of the total weight of the positive electrode. If the content of the binder is less than 1 part by weight, based on 100 parts by weight of the total weight of the positive electrode, the adhesive strength between the positive electrode active material and the current collector may be insufficient. If the content of the binder exceeds 50 parts by weight, based on 100 parts by weight of the total weight of the positive electrode, the adhesive strength is improved but the content of the positive electrode active material may be reduced accordingly, thereby lowering the capacity of the battery.

The electrically conductive material comprised in the positive electrode is not particularly limited as long as it does not cause side reactions in the internal environment of the lithium secondary battery and has excellent electrical conductivity while not causing chemical changes in the battery. The electrically conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, etc.; carbon-based materials whose crystal structure is graphene or graphite; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The electrically conductive material is typically added in an amount of 0.5 to 50 parts by weight, preferably 1 to 30 parts by weight based on 100 parts by weight of total weight of the positive electrode. If the content of electrically conductive material is too low, that is, if it is less than 0.5 parts by weight, it is difficult to obtain an effect on the improvement of the electrical conductivity, or the electrochemical characteristics of the battery may be deteriorated. If the content of the electrically conductive material exceeds 50 parts by weight, that is, if it is too much, the amount of positive electrode active material is relatively small and thus capacity and energy density may be lowered. The method of incorporating the electrically conductive material into the positive electrode is not particularly limited, and conventional methods known in the related art such as coating on the positive electrode active material can be used. Also, if necessary, the addition of the second coating layer with electrical conductivity to the positive electrode material may replace the addition of the electrically conductive material as described above.

In addition, a filler may be selectively added to the positive electrode of the present invention as a component for inhibiting the expansion of the positive electrode. Such a filler is not particularly limited as long as it can inhibit the expansion of the electrode without causing chemical changes in the battery, and examples thereof may comprise olefinic polymers such as polyethylene and polypropylene; fibrous materials such as glass fibers and carbon fibers.

The positive electrode active material, the binder, the electrically conductive material and the like are dispersed and mixed in a dispersion medium (solvent) to form a slurry, and the slurry can be applied onto the positive electrode current collector, followed by drying and rolling it to prepare a positive electrode which is comprised in the lithium secondary battery of the present invention. The dispersion medium may be, but is not necessarily limited to, N-methyl-2-pyrrolidone (NMP), dimethyl formamide (DMF), dimethyl sulfoxide (DMSO), ethanol, isopropanol, water, or a mixture thereof.

The positive electrode current collector may be, but is not necessarily limited to, platinum (Pt), gold (Au), palladium (Pd), iridium (Ir), silver (Ag), ruthenium (Ru), nickel (Ni), stainless steel (STS), aluminum (Al), molybdenum (Mo), chromium (Cr), carbon (C), titanium (Ti), tungsten (W), ITO (In doped $SnO_2$), FTO (F doped $SnO_2$), or an alloy thereof, or aluminum (Al) or stainless steel whose surface is treated with carbon (C), nickel (Ni), titanium (Ti) or silver (Ag) or so on. The shape of the positive electrode current collector may be in the form of a foil, film, sheet, punched

form, porous body, foam or the like.

The negative electrode may be prepared according to a conventional method known in the art. For example, the negative electrode active material, the electrically conductive material, the binder and if necessary, the filler and the like are dispersed and mixed in a dispersion medium (solvent) to form a slurry, and the slurry can be applied onto the negative electrode current collector, followed by drying and rolling it to prepare a negative electrode. As the negative electrode active material, a compound capable of reversibly intercalating and de-intercalating lithium may be used. Specific examples of the negative electrode active material may be carbonaceous materials such as artificial graphite, natural graphite, graphitized carbon fiber, and amorphous carbon; metallic substance capable of alloying with lithium, such as Si, Al, Sn, Pb, Sb, Zn, Bi, In, Mg, Ga, Cd, Si alloy, Sn alloy, or Al alloy; metal oxides capable of doping and de-doping lithium, such as $SiO_\beta(0 < \beta < 2)$, $SnO_2$, vanadium oxide, and lithium vanadium oxide; or a composite including the above-mentioned metallic substance and carbonaceous material, such as a Si-C composite or a Sn-C composite, and any one or a mixture of two or more thereof may be used. In addition, a metal lithium thin film may be used as the negative electrode active material. In addition, as the carbon material, both low crystalline carbon and high crystalline carbon may be used. As low crystalline carbon, soft carbon and hard carbon are representative, and as high crystalline carbon, amorphous, plate-like, flaky, spherical or fibrous natural or artificial graphite, Kish graphite, pyrolytic carbon, mesophase pitch-based carbon fiber, meso-carbon microbeads, mesophase pitches and high-temperature calcined carbon such as petroleum or coal tar pitch derived cokes are representative.

In addition, the binder and electrically conductive material used for the negative electrode may be the same as those described above for the positive electrode. The negative electrode current collector may be, but is not limited to, platinum (Pt), gold (Au), palladium (Pd), iridium (Ir), silver (Ag), ruthenium (Ru), nickel (Ni), stainless steel (STS), copper (Cu), molybdenum (Mo), chromium (Cr), carbon (C), titanium (Ti), tungsten (W), ITO (In doped $SnO_2$), FTO (F doped $SnO_2$), or an alloy thereof, or copper (Cu) or stainless steel whose surface was treated with carbon (C), nickel (Ni), titanium (Ti) or silver (Ag) or so on. The shape of the negative electrode current collector may be in the form of a foil, film, sheet, punched form, porous body, foam or the like.

Meanwhile, in the lithium secondary battery, a solid electrolyte positioned as a film having a layered structure, i.e., the electrolyte for a lithium secondary battery according to the present invention, may be positioned between the positive electrode and the negative electrode. Therefore, in this case, the solid electrolyte may also play a role of a separator (that is, a role of electrically insulating the negative electrode and the positive electrode and passing lithium-ions at the same time). In this case, the solid electrolyte may be comprised in the lithium secondary battery by being attached to one surface of the positive electrode or the negative electrode. In addition, the solid electrolyte may be independently interposed between the positive electrode and the negative electrode. In addition, the lithium secondary battery of the present invention may be a semi-solid battery using a combination of a liquid electrolyte and a solid electrolyte, if necessary. In addition, in this case, a separate separator may be additionally comprised (that is, one or more of a separator and a solid electrolyte may be interposed between the positive electrode and the negative electrode).

If a separate separator is additionally comprised, olefin-based polymers such as polyethylene and polypropylene, glass fibers, and the like may be used in the form of sheets, multilayers, microporous films, woven and nonwoven fabrics, and the like, but are necessarily limited thereto. However, it may be preferable to apply a porous polyethylene or a porous glass fiber nonwoven fabric (glass filter) as a separator, and it may be more preferable to apply a porous glass filter (glass fiber nonwoven fabric) as a separator. The separator may be an insulating thin film having high ion permeability and mechanical strength, and the pore diameter of the separator may generally range from 0.01 to 10 $\mu$m, and the thickness may generally range from 5 to 300 $\mu$m, but is not limited thereto.

Meanwhile, the lithium secondary battery of the present invention may be manufactured according to a conventional method in the art. For example, it can be manufactured by inserting the porous separator between the positive electrode and the negative electrode and injecting the electrolyte solution. The lithium secondary battery according to the present invention is applied to a battery cell used as a power source for a small device, and can also be particularly suitably used as a unit cell for a battery module, which is a power source for medium and large-sized devices. In this aspect, the present invention also provides a battery module comprising two or more lithium secondary batteries electrically connected (series or parallel). Of course, the quantity of lithium secondary batteries comprised in the battery module may be variously adjusted in consideration of the use and capacity of the battery module.

Furthermore, the present invention provides a battery pack in which the battery modules are electrically connected according to a conventional technique in the art. The battery module and the battery pack may be used as a power source for any one or more medium and large-sized devices among a power tool; electric vehicles including electric vehicle (EV), a hybrid electric vehicle (HEV), and a plug-in hybrid electric vehicle (PHEV); electric truck; electric commercial vehicles; or power storage systems, but are not necessarily limited thereto.

Hereinafter, preferred examples of the present invention will be described in order to facilitate understanding of the present invention. It will be apparent to those skilled in the art, however, that the following examples are only illustrative of the present invention and various changes and modifications can be made within the scope and spirit of the present invention, and that such variations and modifications are within the scope of the appended claims.

[Example 1] Manufacturing of lithium secondary battery

Preparation of electrolyte

Polydiallyldimethylammonium-bis(trifluoromethanesulfonyl)imide (DADMA-TFSI, polymer electrolyte) was dissolved in a flame-retardant liquid electrolyte (SCE05, solvent: EC/EMC=1: 9(v/v), lithium salt: 1M LiFSI and 1M $LiPF_6$), and then trimethylolpropane triacrylate (ETPTA, cross-linking agent) was added and mixed therein, and then cured with a UV curing lamp for about 40 seconds to obtain a thin film electrolyte for a lithium secondary battery. Meanwhile, the polymer electrolyte, the flame-retardant liquid electrolyte and the cross-linking agent were used in a weight ratio of 1: 1: 0.8 (about 35.7% by weight: 35.7% by weight: 28.6% by weight).

Manufacture of positive electrode

First, $NiSO_4$, $CoSO_4$, and $MnSO_4$ were mixed in water in a 40L batch type batch reactor set at 50 °C, in an amount such that the molar ratio of nickel: cobalt: manganese was 80: 10: 10, to prepare a precursor formation solution with a concentration of 2.4 M. 13 liters of deionized water was put into a co-precipitation reactor (capacity 40 L), and then nitrogen gas was purged into the reactor at a rate of 25 liters/min to remove dissolved oxygen in the water and create a non-oxidizing atmosphere in the reactor. Thereafter, 83 g of a 25% NaOH aqueous solution was added, and then stirred at a speed of 700 rpm at a temperature of 50 °C to maintain pH 11.5. Thereafter, the precursor formation solution was added at a rate of 1.9 L/hr, and a co-precipitation reaction was performed for 48 hours while adding aqueous NaOH solution and aqueous NH4OH solution together to form particles of nickel-cobalt-manganese-containing hydroxide ($Ni_{0.5}Co_{0.3}Mn_{0.2}(OH)_2$). The obtained hydroxide particles were separated, washed, and dried in an oven at 120 °C to prepare a nickel-cobalt-manganese precursor (D50 = 4.8 $\mu$m). Subsequently, the prepared nickel-cobalt-manganese precursor and lithium source LiOH were put into a Henschel mixer (20L) in an amount such that the Li/M (Ni, Co, Mn) molar ratio was 1.02, and mixed at 300 rpm in the center for 20 minutes. The mixed powder was put into an alumina crucible with a size of 330 mm $\times$ 330 mm and fired at 1,010 to 1,030 °C for 15 hours in an oxygen atmosphere to prepare a lithium nickel cobalt manganese-based positive electrode active material.

Subsequently, the prepared lithium nickel cobalt manganese-based positive electrode active material, carbon black as an electrically conductive material and polyvinylidene fluoride (PVdF) as a binder are mixed in a weight ratio of 96.5: 1.5: 2, and dispersed in an NMP solvent to prepare a slurry, and then it was coated with a uniform thickness on aluminum foil (Al foil) having a thickness of 25 $\mu$m by Mattis coater (Labdryer/coater type LTE, Werner Mathis AG company), which is a blade-type coating machine, and dried in a vacuum oven at 120 °C for 13 hours to obtain a positive electrode for a lithium secondary battery.

Manufacture of lithium secondary battery

A negative electrode containing graphite as an active material and the prepared positive electrode were positioned to face each other, and then was interposed the prepared electrolyte thin film for a secondary battery therebetween to manufacture an electrode assembly, and placed the manufactured electrode assembly inside a case to manufacture a lithium secondary battery.

[Example 2] Manufacture of lithium secondary battery

A lithium secondary battery was manufactured in the same manner as in Example 1 above, except that when adding the cross-linking agent (trimethylolpropane triacrylate, ETPTA), $Li_7La_3Zr_2O_{12}$ (LLZO, active oxide-based ceramic) is also added together. Meanwhile, the polymer electrolyte, the flame-retardant liquid electrolyte, the cross-linking agent, and the active oxide-based ceramic were used in a weight ratio of 1: 1: 0.8: 0.5.

[Comparative Example 1] Manufacture of lithium secondary battery

A lithium secondary battery was manufactured in the same manner as in Example 1 above, except that the polymer electrolyte is changed from polydiallyldimethylammonium-bis(trifluoromethanesulfonyl)imide (DADMA-TFSI) to polyethylene oxide (PEO, Mw = about 10,000).

[Comparative Example 2] Manufacture of lithium secondary battery

A lithium secondary battery was manufactured in the same manner as in Example 1 above, except that the cross-linking agent (trimethylolpropane triacrylate, ETPTA) is not used.

[Comparative Example 3] Manufacture of lithium secondary battery

A lithium secondary battery was manufactured in the same manner as in Example 1 above, except that the weight ratio of the polymer electrolyte, the flame-retardant liquid electrolyte, and the cross-linking agent changes from 1: 1: 0.8 (about 35.7% by weight: 35.7% by weight: 28.6% by weight) to 1: 2.2: 1.78 (about 20% by weight: 44.5% by weight: 35.5% by weight).

[Comparative Example 4] Manufacture of lithium secondary battery

A lithium secondary battery was manufactured in the same manner as in Example 1 above, except that the weight ratio of the polymer electrolyte, the flame-retardant liquid electrolyte, and the cross-linking agent changes from 1: 1: 0.8 (about 35.7% by weight: 35.7% by weight: 28.6% by weight) to 1: 2.55: 0.7 (about 23.5% by weight: 60% by weight: 16.5% by weight).

[Experimental Example 1] Measurement of ionic conductivity

Ion conductivities of the electrolytes for a lithium secondary battery prepared in Examples 1 and 2 and Comparative Examples 1 to 4 were measured, and the results are shown in Table 1 below. An alternating current impedance (AC impedance) measuring instrument, IVIUM STAT (Ivium Technologies, Netherlands) was used to measure the ionic conductivity.

Table 1:

| | Ionic conductivity ($\lambda$[S/cm]) |
|---|---|
| Example 1 | $2.77\times10^{-4}$ |
| Example 2 | $3.14\times10^{-4}$ |
| Comparative Example 1 | $7.90\times10^{-5}$ |
| Comparative Example 2 | $7.70\times10^{-5}$ |
| Comparative Example 3 | $2.04\times10^{-5}$ |
| Comparative Example 4 | $2.54\times10^{-5}$ |

As a result of measuring the ionic conductivity of the electrolytes for a lithium secondary battery prepared in Examples 1 and 2 and Comparative Examples 1 to 4, respectively, the electrolyte of Example 1 comprising the polymer electrolyte containing a hydrocarbon-based polymer compound containing a cationic functional group, the flame-retardant liquid electrolyte and the cross-linking agent, and the electrolyte of Example 2, which further comprises the active oxide-based ceramic in addition to those in Example 1, showed higher ionic conductivities than the electrolyte of Comparative Example 1 comprising a conventional polymer electrolyte or the electrolyte of Comparative Example 2 excluding only the cross-linking agent from the electrolyte of Example 1, as shown in Table 1 above. In addition, Comparative Example 3, in which the content of the polymer electrolyte was out of the scope of the present invention, and Comparative Example 4, in which the content of the flame-retardant liquid electrolyte was out of the scope of the present invention, also showed lower ionic conductivity than Examples 1 and 2. In addition, through comparison and contrast of Example 1 and Example 2, it was confirmed that the ionic conductivity was further increased when the active oxide-based ceramic was comprised in the electrolyte.

[Experimental Example 2] Measurement of cation transport coefficient

A voltage of 10 mV was applied to the lithium secondary batteries prepared in Examples 1 and 2 and Comparative Examples 1 to 4, respectively, to induce polarization at the electrodes, and then the current in the polarized state was measured, and based on the measured current value, the cation transport coefficient (t+) of the liquid electrolyte was measured using Equation 1 according to the Bruce-Vincent method. Meanwhile, the measured current value is a current value per second when there is a current change of 1 $\mu$A (i.e., dI=1$\mu$A & dt=1sec).

[Equation 1]

$$t_+ = \frac{I_{ss}(\Delta V - I_0 R_0)}{I_0(\Delta V - I_{ss} R_{ss})}$$

wherein, $I_{ss}$ is the current value flowing in the steady state and is 25.5 $\mu$A (measured up to 6 hours), $I_0$ is the current value flowing in the polarized state and is 44.6 $\mu$A, $\Delta V$ is the potential difference applied across the cell, $R_0$ is the interface resistance in the polarized state and is 136.06, and $R_{ss}$ is the interface resistance in the steady state and is 314.74.

In addition, the results of measuring the cation transport coefficient for the lithium secondary batteries prepared in Examples 1 and 2 and Comparative Examples 1 to 4, respectively, are shown in Table 2 below.

Table 2:

| | Cation transport coefficient |
|---|---|
| Example 1 | 0.63 |
| Example 2 | 0.60 |
| Comparative Example 1 | 0.18 |
| Comparative Example 2 | 0.19 |
| Comparative Example 3 | 0.31 |
| Comparative Example 4 | 0.25 |

As a result of measuring the cation transport coefficients on the lithium secondary batteries manufactured in Examples 1 and 2 and Comparative Examples 1 to 4 as described above, respectively, the electrolyte of Example 1 comprising the polymer electrolyte containing a hydrocarbon-based polymer compound containing a cationic functional group, the flame-retardant liquid electrolyte and the cross-linking agent, and the electrolyte of Example 2, which further comprises the active oxide-based ceramic in addition to those in Example 1, showed higher cation transport coefficients than the electrolyte of Comparative Example 1 comprising a conventional polymer electrolyte or the electrolyte of Comparative Example 2 excluding only the cross-linking agent from the electrolyte of Example 1, as shown in Table 2 above. In addition, Comparative Example 3, in which the content of the polymer electrolyte was out of the scope of the present invention, and Comparative Example 4, in which the content of the flame-retardant liquid electrolyte was out of the scope of the present invention, also showed lower cation transport coefficients than Examples 1 and 2. Through this, it was confirmed that according to the present invention, there is an advantage of lowering the concentration polarization (resistance) compared to conventional electrolytes.

## Claims

1. An electrolyte for a lithium secondary battery, comprising:

   a polymer electrolyte containing a hydrocarbon-based polymer compound containing a cationic functional group;
   a flame-retardant liquid electrolyte; and
   a cross-linking agent.

2. The electrolyte for a lithium secondary battery according to claim 1, wherein the hydrocarbon-based polymer compound contains a hydrocarbon structural unit having 6 to 20 carbon atoms, which contains at least one cationic functional group.

3. The electrolyte for a lithium secondary battery according to claim 1, wherein the cationic functional group comprises at least one cation selected from nitrogen cations, oxygen cations, and sulfur cations.

4. The electrolyte for a lithium secondary battery according to claim 1, wherein the hydrocarbon-based polymer compound containing the cationic functional group comprises at least one selected from the group consisting of polydiallyldimethylammonium (($C_8H_{16}N^+$)n, 1<n<10,000), polymethacryloxyethyltrimethylammonium(($C_9H_{18}NO_2^+$)n,

1<n<10,000), polyallylamine([$CH_2CH(CH_2NH_2)$]n, 1<n<10,000) and polysodium 4-styrenesulfonate (($C_8H_7NaO_3S$)n, 1<n<10,000).

**5.** The electrolyte for a lithium secondary battery according to claim 1, wherein the hydrocarbon-based polymer compound further comprising an anion as a counter ion to the cation contained in the cationic functional group.

**6.** The electrolyte for a lithium secondary battery according to claim 5, wherein the anion is the anion of the lithium salt contained in the electrolyte for a lithium secondary battery.

**7.** The electrolyte for a lithium secondary battery according to claim 1, wherein the flame-retardant liquid electrolyte comprises at least one solvent selected from the group consisting of carbonate-based compounds, phosphate-based compounds, and ionic liquids; and lithium salt.

**8.** The electrolyte for a lithium secondary battery according to claim 1, wherein the cross-linking agent is selected from the group consisting of ethoxylated trimethylolpropane triacrylate, trimethylolpropane ethoxytriacrylate, dipentaerythritol penta/hexa-acrylate and tris(2-hydroxyethyl)isocyanurate triacrylate.

**9.** The electrolyte for a lithium secondary battery according to claim 1, wherein the polymer electrolyte is contained in an amount of 30 to 60% by weight, the flame-retardant liquid electrolyte is contained in an amount of 30 to 50% by weight, and the cross-linking agent is contained in an amount of 2 to 30% by weight.

**10.** The electrolyte for a lithium secondary battery according to claim 1, wherein the electrolyte for a lithium secondary battery further comprising an active oxide-based ceramic.

**11.** The electrolyte for a lithium secondary battery according to claim 10, wherein the active oxide-based ceramic is selected from the group consisting of $Li_{1+x}Al_xGe_{2-x}(PO_4)_3$ (LAGP), $Li_7La_3Zr_2O_{12}$ (LLZO) and $Li_{1+x}Al_xTi_{2-x}(PO_4)_3$ (LATP).

**12.** The electrolyte for a lithium secondary battery according to claim 10, wherein the active oxide-based ceramic is contained in an amount of 15 to 100 parts by weight based on 100 parts by weight of the total weight of the electrolyte for a lithium secondary battery comprising the polymer electrolyte, the flame-retardant liquid electrolyte and the cross-linking agent.

**13.** A lithium secondary battery comprising a positive electrode comprising a lithium nickel cobalt manganese-based positive electrode active material; a negative electrode; and the electrolyte for a lithium secondary battery of claim 1 interposed between the positive electrode and the negative electrode.

**14.** The lithium secondary battery according to claim 13, wherein the electrolyte for a lithium secondary battery is attached in the form of a thin film to one side of the positive electrode or the negative electrode, or is independently interposed between the positive electrode and the negative electrode.

**15.** The lithium secondary battery according to claim 13, wherein the lithium secondary battery further comprises separately a separator between the positive electrode and the negative electrode.

**16.** The lithium secondary battery according to claim 13, wherein the lithium secondary battery is a semi-solid battery comprising a liquid electrolyte and a solid electrolyte.

## INTERNATIONAL SEARCH REPORT

International application No. **PCT/KR2023/004913**

**A. CLASSIFICATION OF SUBJECT MATTER**

**H01M 10/0565**(2010.01)i; **H01M 10/056**(2010.01)i; **H01M 10/42**(2006.01)i; **H01M 10/052**(2010.01)i; **H01M 4/525**(2010.01)i; **H01M 4/505**(2010.01)i

According to International Patent Classification (IPC) or to both national classification and IPC

**B. FIELDS SEARCHED**

Minimum documentation searched (classification system followed by classification symbols)

H01M 10/0565(2010.01); H01M 10/052(2010.01); H01M 10/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 양이온성 작용기(cationic functional group), 고분자 전해질(polymer electrolyte), 액체 전해질(liquid electrolyte), 가교제(crosslinking agent), 세라믹(ceramic), 반-고체 전해질(semi-solid electrolyte), 리튬 이차전지(lithium secondary battery)

**C. DOCUMENTS CONSIDERED TO BE RELEVANT**

| Category* | Citation of document, with indication, where appropriate, of the relevant passages | Relevant to claim No. |
|---|---|---|
| Y | KR 10-1747864 B1 (SAMSUNG ELECTRONICS CO., LTD.) 27 June 2017 (2017-06-27)<br>See claims 1, 3, 9-12, 15, 16, 24 and 28-30; and paragraphs [0029], [0031], [0035], [0036], [0058], [0077], [0079], [0095], [0124], [0145]-[0147] and [0152]. | 1-16 |
| Y | KR 10-2022-0018357 A (POSCO et al.) 15 February 2022 (2022-02-15)<br>See claims 1-7; and paragraphs [0020], [0024], [0065]-[0068] and [0113]-[0116]. | 1-16 |
| Y | KR 10-2019-0133697 A (HITACHI CHEMICAL COMPANY, LTD.) 03 December 2019 (2019-12-03)<br>See claims 1 and 6; and paragraphs [0042], [0057], [0066]-[0069], [0073]-[0076], [0081], [0083], [0093], [0094], [0105] and [0106]. | 1-16 |
| Y | MATSUMOTO, K. et al. Synthesis and Properties of Methacrylate-Based Networked Polymers Having Ionic Liquid Structures. Journal of polymer science Part A, Polymer chemistry. 2010, vol. 48, no. 20, pp. 4515-4521.<br>See abstract; CONCLUSIONS section; figure 3; and table 2. | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 July 2023** | **17 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2023/004913

C. DOCUMENTS CONSIDERED TO BE RELEVANT

| Category* | Citation of document, with indication, where appropriate, of the relevant passages | Relevant to claim No. |
|---|---|---|
| A | KR 10-2039602 B1 (IUCF-HYU (INDUSTRY-UNIVERSITY COOPERATION FOUNDATION HANYANG UNIVERSITY)) 04 November 2019 (2019-11-04) See entire document. | 1-16 |

Form PCT/ISA/210 (second sheet) (July 2022)

**INTERNATIONAL SEARCH REPORT**
**Information on patent family members**

International application No.
**PCT/KR2023/004913**

| Patent document cited in search report | | | Publication date (day/month/year) | Patent family member(s) | | | Publication date (day/month/year) |
|---|---|---|---|---|---|---|---|
| KR | 10-1747864 | B1 | 27 June 2017 | CN | 105390743 | A | 09 March 2016 |
| | | | | CN | 105390743 | B | 11 June 2021 |
| | | | | EP | 2991153 | A1 | 02 March 2016 |
| | | | | KR | 10-2016-0026648 | A | 09 March 2016 |
| | | | | US | 10205190 | B2 | 12 February 2019 |
| | | | | US | 2016-0064770 | A1 | 03 March 2016 |
| KR | 10-2022-0018357 | A | 15 February 2022 | KR | 10-2466504 | B1 | 10 November 2022 |
| KR | 10-2019-0133697 | A | 03 December 2019 | CN | 110537283 | A | 03 December 2019 |
| | | | | EP | 3614480 | A1 | 26 February 2020 |
| | | | | EP | 3614480 | A4 | 25 November 2020 |
| | | | | US | 2021-119253 | A1 | 22 April 2021 |
| | | | | WO | 2018-193628 | A1 | 25 October 2018 |
| KR | 10-2039602 | B1 | 04 November 2019 | KR | 10-2039602 | B1 | 04 November 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220045454
- KR 1020230043320